# EUROPÄISCHE PATENTSCHRIFT

(11) **EP 2 491 604 B1**
(45) Veröffentlichungstag und Bekanntmachung des Hinweises auf die Patenterteilung: **25.03.2020**
(21) Anmeldenummer: 10768446.6
(22) Anmeldetag: 08.10.2010
(51) Int. Cl.: H01M 2/10, B25F 5/00

(54) **HANDWEKZEUG, HANDWERKZEUGZUSATZMESSGERÄT UND HANDWERKZEUGAKKU**
HAND-HELD TOOL, AUXILIARY MEASURING DEVICE FOR A HAND-HELD TOOL AND BATTERY FOR HAND-HELD TOOL
OUTIL À MAIN, APPAREIL DE MESURE AUXILIAIRE POUR OUTIL À MAIN ET ACCUMULATEUR D'OUTIL À MAIN

(30) Priorität: 23.10.2009 DE 102009045946
(43) Veröffentlichungstag der Anmeldung: 29.08.2012
(73) Patentinhaber: Robert Bosch GmbH, 70442 Stuttgart (DE)
(72) Erfinder: MATTHIAS, Wolf, 70469 Stuttgart (DE); FLINSPACH, Gunter, 71229 Leonberg (DE); OSSWALD, Alexander, 70599 Stuttgart (DE); GLAUNING, Rainer, 70771 Leinfelden-Echterdingen (DE)
(86) Internationale Anmeldenummer: PCT/EP2010/065115
(87) Internationale Veröffentlichungsnummer: WO 2011/047975

(56) Entgegenhaltungen:
- EP-A1- 1 927 438
- US-A1- 2006 087 285
- US-A1- 2007 103 116
- US-A1- 2007 224 492
- US-B1- 6 536 536

## Beschreibung

### Stand der Technik

Die Erfindung geht aus von einem System nach dem Oberbegriff des Anspruchs 1. Ein derartiges System geht beispielsweise aus der EP 1 927 438 A1 hervor.

Es ist bereits ein Handwerkzeug, insbesondere eine Handwerkzeugmaschine, mit einer Akkuschnittstelle, vorgeschlagen worden.

### Offenbarung der Erfindung

Die Erfindung sieht ein System gemäß Patentanspruch 1 vor, bestehend aus einem Handwerkzeug mit einer Akkuschnittstelle einem Handwerkzeugakku und einem Handwerkzeugzusatzmessgerät.

Das Handwerkzeug weist zumindest eine Messgerätschnittstelle auf, die dazu vorgesehen ist, zumindest Daten mit Messinformationen eines Handwerkzeugzusatzmessgeräts zu empfangen. Unter einer "Akkuschnittstelle" soll insbesondere eine Schnittstelle verstanden werden, die in zumindest einem Betriebszustand eine Betriebsenergie für ein Hauptaktionsmittel, beispielsweise einen Messsensor und/oder insbesondere einen Antriebsmotor, aufnimmt. Die Akkuschnittstelle kann vorzugsweise einen entweder innerhalb und/oder vorteilhaft einen zumindest teilweise außerhalb eines Handwerkzeuggehäuses des Handwerkzeugs angeordneten Akku kontaktieren. Vorteilhaft ist eine mechanische und/oder elektrische Verbindung der Akkuschnittstelle werkzeuglos trennbar. Insbesondere soll unter einer "Messgerätschnittstelle" eine Schnittstelle verstanden werden, durch die ein Handwerkzeug mit einem Handwerkzeugzusatzmessgerät von einem Bediener nachgerüstet werden kann. Vorzugsweise sind die Messgerätschnittstelle und die Akkuschnittstelle funktionell getrennt und/oder insbesondere räumlich getrennt angeordnet. Alternativ können die Messgerätschnittstelle und die Akkuschnittstelle, insbesondere eine mechanische Befestigung, zumindest teilweise einstückig ausgebildet sein. Unter einem "Handwerkzeugzusatzmessgerät" soll insbesondere ein baulich von dem Handwerkzeug und insbesondere baulich von einem Handwerkzeugakku getrenntes Nachrüstmessgerät mit einem Messsensor verstanden werden, das während eines Betriebs zumindest eine Messinformation erfasst und die Messinformation von dem Handwerkzeug abrufbar bereitstellt. Vorteilhaft misst das Handwerkzeugzusatzmessgerät eine Neigung, eine Entfernung, eine Temperatur, ein Feuchte, eine Beschaffenheit eines Werkstücks und/oder erfasst eine andere, dem Fachmann als sinnvoll erscheinende Messinformation. Insbesondere soll unter "vorgesehen" speziell ausgestattet, ausgelegt und/oder programmiert verstanden werden. Unter einem "Handwerkzeug" soll insbesondere ein dem Fachmann als sinnvoll erscheinendes Handwerkzeug, wie insbesondere ein Bohrhammer, eine Säge, ein Hobel, ein Schrauber, eine Fräse, ein Schleifer, ein Winkelschleifer, ein Messwerkzeug, ein Multifunktionswerkzeug und/oder insbesondere eine Bohrmaschine verstanden werden. Vorteilhaft ist das Handwerkzeug als eine Handwerkzeugmaschine ausgebildet. Vorzugsweise ist das Handwerkzeug auch von dem Handwerkzeugzusatzmessgerät funktionell getrennt einsetzbar. Vorteilhaft weist ein mit dem Handwerkzeugzusatzmessgerät nachgerüstetes Handwerkzeug zumindest eine weiterführende, von der Messinformation abhängige Funktion auf. Durch die Ausgestaltung des Handwerkzeugs kann konstruktiv einfach ein vorhandenes Handwerkzeug mit einer Funktion, die auf einer Messinformation beruht, nachgerüstet werden und dadurch ein besonders vielseitiges, flexibles und komfortables Handwerkzeug erreicht werden.

In einer weiteren Ausgestaltung wird vorgeschlagen, dass das Handwerkzeug eine Steuereinheit aufweist, die dazu vorgesehen ist, einen Arbeitsvorgang von den Messinformationen abhängig zu beeinflussen. Unter einer "Steuereinheit" soll insbesondere auch eine Einheit verstanden werden, die eine Regelung vornimmt. Vorzugsweise weist die Steuereinheit eine Recheneinheit auf. Insbesondere soll unter einem "Arbeitsvorgang" ein Zeitraum verstanden werden, bei dem das Hauptaktionsmittel des Handwerkzeugs eine Aufgabe ausführt, d.h. insbesondere eine Messung vornimmt oder vorteilhaft ein Werkstück bearbeitet. Unter der Wendung "von den Messinformationen abhängig" soll insbesondere verstanden werden, dass die Steuereinheit die Messinformationen aufnimmt, verarbeitet und eine Steuer- und/oder Regelgröße ausgibt. Vorzugsweise beeinflusst eine Steuer- und/oder Regelgröße der Steuereinheit einen Zustand des Hauptaktionsmittels. Durch die den Arbeitsvorgang beeinflussende Steuereinheit können besonders vorteilhafte Funktionen, die einen Bediener bei einer Arbeit unterstützen, besonders flexibel bereitgestellt werden. Alternativ oder zusätzlich könnte die Steuereinheit oder ein Teil der Steuereinheit in dem Handwerkzeugzusatzmessgerät und/oder in dem Handwerkzeugakku angeordnet sein und/oder ein Teil davon sein.

Des Weiteren wird vorgeschlagen, dass die Steuereinheit dazu vorgesehen ist, einen Arbeitsvorgang von den Messinformationen abhängig zu stoppen, wodurch vorteilhaft Sicherheitsfunktionen und automatische Bearbeitungsendstellungen erreicht werden können. Unter "stoppen" soll insbesondere ein Einsatzwerkzeug anhalten, einen Messvorgang beenden und/oder einen Arbeitsvorgang auf eine andere, dem Fachmann als sinnvoll erscheinende Art beenden, verstanden werden. Alternativ oder zusätzlich könnte die Steuereinheit einen Beginn eines Arbeitsvorgangs verhindern und/oder einen Arbeitsvorgang starten.

Ferner wird vorgeschlagen, dass die Messgerätschnittstelle werkzeuglos trennbar ist, wodurch ein besonders komfortables Ausrüsten des Handwerkzeugs durch einen Bediener mit verschiedenen Handwerkzeugzusatzmessgeräten, insbesondere kurzzeitig, erreicht werden kann. Unter der Wendung "werkzeuglos trennbar" soll insbesondere verstanden werden, dass ein Bediener händisch ein an die Messgerätschnittstelle angeschlossenes Handwerkzeugzusatzmessgerät, insbesondere ohne dass er hierfür ein zusätzliches Werkzeug benötigt, von dem Handwerkzeugzusatzmessgerät mechanisch und insbesondere elektrisch trennen kann. Vorzugsweise weisen das Handwerkzeugzusatzmessgerät und das Handwerkzeug zwei getrennt ausgebildete Gehäuse auf. Vorteilhaft sind verschiedene Handwerkzeugzusatzmessgeräte, die insbesondere verschiedene Funktionalitäten ermöglichen, von einem Bediener mit dem Handwerkzeug verbindbar.

Zudem wird vorgeschlagen, dass die Messgerätschnittstelle zumindest ein Empfangsmittel aufweist, das dazu vorgesehen ist, drahtlos übermittelte Daten mit Messinformationen zu empfangen, wodurch das Handwerkzeugzusatzmessgerät besonders flexibel angeordnet werden kann und keine leitenden Kontakte an einer Oberfläche benötigt werden. Unter einem "Empfangsmittel" soll insbesondere ein Mittel verstanden werden, das kapazitiv, optisch, induktiv, auf eine dem Fachmann als sinnvoll erscheinende Art und/oder insbesondere elektromagnetisch übertragene Leistung, die Daten mit Messinformationen beschreibt, in zumindest einem Betriebszustand empfängt. Unter der Wendung "drahtlos empfangen" soll insbesondere verstanden werden, dass das Empfangsmittel dazu vorgesehen ist, über einen körperlosen Informationsträger übermittelte Informationen zu empfangen. Alternativ oder zusätzlich weist die Messgerätschnittstelle ein Empfangsmittel auf, das in zumindest einem Betriebszustand die Daten drahtgebunden empfängt. Unter "drahtgebunden" soll insbesondere über einen elektrischen Leiter übertragen verstanden werden.

In einer vorteilhaften Ausbildung der Erfindung wird vorgeschlagen, dass die Handwerkzeugmaschine eine Energieschnittstelle aufweist, die in zumindest einem Betriebszustand eine Betriebsenergie an das Handwerkzeugzusatzmessgerät abgibt. Unter einer "Energieschnittstelle" soll insbesondere eine Schnittstelle verstanden werden, die über ein insbesondere leitendes Kontaktmittel eine elektrische Energie übertragen kann. Alternativ oder zusätzlich könnte die Energieschnittstelle eine Energie auch induktiv übertragen. Insbesondere ist die Energieschnittstelle dazu vorgesehen, zumindest eine Energie von wenigstens 0,1 Watt, vorteilhaft wenigstens 1 Watt, besonders vorteilhaft wenigstens 10 Watt zu übertragen. Unter dem Begriff "Betriebsenergie" soll insbesondere eine Energie verstanden werden, die zumindest dazu vorgesehen ist, einen Messsensor und/oder ein Sendemittel des Handwerkzeugzusatzmessgeräts mit Energie zu versorgen. Alternativ oder zusätzlich könnte das Handwerkzeugzusatzmessgerät einen Betriebsenergiespeicher aufweisen. Durch die Energieschnittstelle kann vorteilhaft das Handwerkzeugzusatzmessgerät besonders preiswert ausgebildet sein.

Das Handwerkzeugzusatzmessgerät weist zumindest eine Handwerkzeugschnittstelle auf, die dazu vorgesehen ist, Daten mit Messinformationen zumindest an das Handwerkzeug zu übertragen. Unter einer "Handwerkzeugschnittstelle" soll insbesondere eine Schnittstelle verstanden werden, die in einem betriebsbereiten Zustand indirekt oder direkt mit dem Handwerkzeug verbunden ist. Insbesondere soll unter der Wendung "Daten übertragen" verstanden werden, dass die Handwerkzeugschnittstelle eine Leistung, die Daten mit Messinformationen beschreibt, aussendet oder bereitstellt. Durch die erfindungsgemäße Ausgestaltung des Handwerkzeugzusatzmessgeräts kann das Handwerkzeug besonders flexibel und konstruktiv einfach mit unterschiedlichen zusätzlichen Funktionen nachgerüstet werden.

In einer weiteren Ausgestaltung wird vorgeschlagen, dass das Handwerkzeugzusatzmessgerät eine Energieschnittstelle aufweist, die dazu vorgesehen ist, eine Betriebsenergie von einem Handwerkzeugakku aufzunehmen, der gleichzeitig das Handwerkzeug versorgt. Unter einem "Handwerkzeugakku" soll insbesondere ein Akku verstanden werden, der in zumindest einem Betriebszustand zumindest das Hauptaktionsmittel des Handwerkzeugs mit Betriebsenergie versorgt. Vorteilhaft versorgt der Handwerkzeugakku das Handwerkzeug und das Handwerkzeugzusatzmessgerät gleichzeitig mit einer Betriebsenergie. Vorzugsweise ist die Energieschnittstelle des Handwerkzeugzusatzmessgeräts dazu vorgesehen, mit einer Messgerätschnittstelle eines Handwerkzeugakkus oder mit der Energieschnittstelle des Handwerkzeugs verbunden zu werden. Durch die Energieschnittstelle kann das Handwerkzeugzusatzmessgerät konstruktiv einfach und bauteilesparend ausgebildet sein, insbesondere indem das Handwerkzeugzusatzmessgerät betriebsenergiespeicherfrei ausgebildet ist.

Ferner wird vorgeschlagen, dass die Handwerkzeugschnittstelle ein Sendemittel aufweist, das dazu vorgesehen ist, die Daten drahtlos zu übermitteln. Unter einem "Sendemittel" soll insbesondere ein Mittel verstanden werden, das in zumindest einem Betriebszustand mittels einer Leistung kapazitiv, optisch, induktiv, auf eine dem Fachmann als sinnvoll erscheinende Art und/oder insbesondere elektromagnetisch zumindest Daten mit Messinformationen aussendet. Durch das drahtlos übermittelnde Sendemittel kann konstruktiv einfach eine besonders flexible und komfortable Datenübermittlung, insbesondere ohne oberflächliche leitende Kontakte, erreicht werden.

Der Handwerkzeugakku weist eine Handwerkzeugschnittstelle auf, die dazu vorgesehen ist, zumindest Energie an das Handwerkzeug zu übertragen.

Es wird vorgeschlagen, dass der Handwerkzeugakku zumindest eine Messgerätschnittstelle aufweist, die in zumindest einem Betriebszustand eine Energie an das Handwerkzeugzusatzmessgerät, vorzugsweise direkt, überträgt. Insbesondere soll unter einer "Handwerkzeugschnittstelle" eine Schnittstelle verstanden werden, die zumindest dazu vorgesehen ist, eine Energie an ein Hauptaktionsmittel des Handwerkzeugs abzugeben, und zwar insbesondere in zumindest einem Betriebszustand wenigstens 1 Watt, vorteilhaft wenigstens 10 Watt, besonders vorteilhaft wenigstens 100 Watt. Unter einer "Messgerätschnittstelle" soll in diesem Zusammenhang insbesondere eine Schnittstelle verstanden werden, die zumindest dazu vorgesehen ist, eine Energie an ein Hauptaktionsmittel des Handwerkzeugzusatzmessgeräts abzugeben, und zwar insbesondere in zumindest einem Betriebszustand wenigstens 0,1 Watt, vorteilhaft wenigstens 1 Watt, besonders vorteilhaft wenigstens 10 Watt. Vorzugsweise sind die Handwerkzeugschnittstelle und die Messgerätschnittstelle funktionell getrennt und/oder insbesondere räumlich getrennt angeordnet. Vorteilhaft ist die Handwerkzeugschnittstelle und/oder die Messgerätschnittstelle dazu vorgesehen, eine Energie induktiv und/oder insbesondere drahtlos zu übertragen. Durch die Ausgestaltung des Handwerkzeugakkus kann konstruktiv einfach das Handwerkzeugzusatzmessgerät mit Energie versorgt werden und insbesondere eine vorteilhafte Anordnung des Handwerkzeugzusatzmessgeräts erreicht werden. Zudem können vorteilhaft, bei einer entsprechenden Ausgestaltung des Handwerkzeugzusatzmessgeräts, der Handwerkzeugakku und das Handwerkzeugzusatzmessgerät von dem Handwerkzeug getrennt eine Messaufgabe erfüllen.

In einer vorteilhaften Ausbildung der Erfindung wird vorgeschlagen, dass die Messgerätschnittstelle dazu vorgesehen ist, Daten mit Messinformationen von dem Handwerkzeugzusatzmessgerät, insbesondere drahtgebunden, zu empfangen, wodurch konstruktiv einfach Messdaten von dem Handwerkzeugzusatzmessgerät in dem Handwerkzeugakku bereitgestellt und insbesondere verarbeitet werden können.

In einer weiteren Ausgestaltung wird vorgeschlagen, dass die Handwerkzeugschnittstelle dazu vorgesehen ist, zumindest Daten mit Messinformationen, insbesondere drahtgebunden, an das Handwerkzeug zu übertragen, wodurch konstruktiv besonders einfach Messinformationen an das Handwerkzeug weitergeleitet werden können.

Des Weiteren wird vorgeschlagen, dass der Handwerkzeugakku zumindest ein Schaltelement aufweist, das dazu vorgesehen ist, von den Daten mit Messinformationen abhängig eine Energieversorgung des Handwerkzeugs zu schalten und/oder insbesondere abzuschalten. Unter einem "Schaltelement" soll insbesondere ein, dem Fachmann als sinnvoll erscheinendes Schaltelement verstanden werden, mit dem eine elektrisch übertragene Energie eingeschaltet, gesteuert und/oder insbesondere unterbrochen werden kann. Insbesondere soll unter der Wendung "von den Daten mit Messinformationen abhängig" verstanden werden, dass eine Steuereinheit des Handwerkzeugakkus die Messinformationen auswertet und auf der Auswertung basierend das Schaltelement ansteuert. Durch das Schaltelement können mit besonders geringem Aufwand verschiedene Funktionen und insbesondere Schutzfunktionen von dem Handwerkzeugakku erfüllt werden. Vorteilhaft kann dadurch konstruktiv einfach eine Redundanz erreicht werden.

Die Erfindung geht aus von einem System mit einem Handwerkzeugzusatzmessgerät und mit einem Handwerkzeug und einem Handwerkzeugakku, wodurch das Handwerkzeugzusatzmessgerät, das Handwerkzeug und/oder der Handwerkzeugakku vorteilhaft auf einander abgestimmt werden können.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in einer schematischen Darstellung:
- Fig. 1: ein erfindungsgemäßes System mit einer Handwerkzeugmaschine, einem Handwerkzeugzusatzmessgerät und einem Handwerkzeugakku und
- Fig. 2: ein nicht erfindungsgemäßes System mit einem Handwerkzeugmessgerät und einem Handwerkzeugzusatzmessgerät.

### Beschreibung der Ausführungsbeispiele

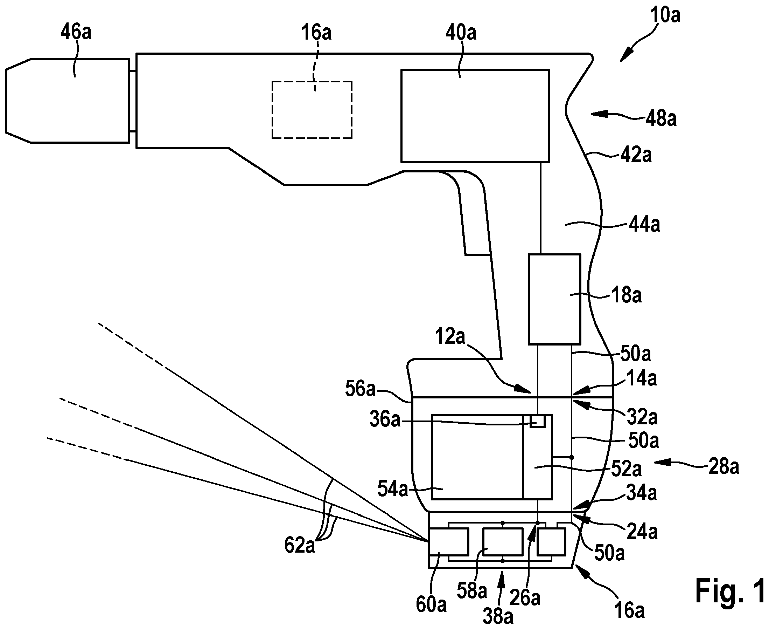

Figur 1 zeigt ein erfindungsgemäßes System 38a mit einem Handwerkzeug 10a, einem Handwerkzeugzusatzmessgerät 16a und einem Handwerkzeugakku 28a. Das Handwerkzeug 10a ist als eine Handwerkzeugmaschine bzw. als eine Schlagbohrmaschine ausgebildet. Das Handwerkzeug 10a weist eine Akkuschnittstelle 12a, eine Messgerätschnittstelle 14a, eine Steuereinheit 18a, ein Hauptaktionsmittel 40a, ein pistolenförmiges Handwerkzeuggehäuse 42a mit einem Haupthandgriff 44a und eine Einsatzwerkzeugbefestigung 46a auf.

Das Hauptaktionsmittel 40a ist als ein Elektromotor ausgebildet und in einem im Wesentlichen röhrenförmigen oberen Bereich 48a des Handwerkzeuggehäuses 42a angeordnet. Das Hauptaktionsmittel 40a treibt während eines Betriebs die Einsatzwerkzeugbefestigung 46a drehend an. Die Einsatzwerkzeugbefestigung 46a ist an einem dem Haupthandgriff 44a abgewandten Ende des oberen Bereichs 48a angeordnet.

Die Steuereinheit 18a ist in dem Haupthandgriff 44a zwischen der Akkuschnittstelle 12a und dem Hauptaktionsmittel 40a angeordnet und wirkungsmäßig mit dem Hauptaktionsmittel 40a und der Akkuschnittstelle 12a verbunden. Die Akkuschnittstelle 12a verbindet, elektrisch und mechanisch werkzeuglos trennbar, in einem betriebsbereiten Zustand den Handwerkzeugakku 28a mit dem Handwerkzeug 10a. Dabei ist ein nicht näher dargestelltes mechanisches Verbindungselement der Akkuschnittstelle 12a einstückig mit einem mechanischen Verbindungselement der Messgerätschnittstelle 14a ausgebildet. Die Messgerätschnittstelle 14a ist ebenfalls werkzeuglos trennbar ausgebildet und ist in diesem Ausführungsbeispiel ebenfalls mit dem Handwerkzeugakku 28a verbunden. Ferner ist die Messgerätschnittstelle 14a als eine Schnittstelle für eine schematisch dargestellte Datenverbindung 50a ausgebildet. Die Datenverbindung 50a ist als ein Datenbus ausgebildet. Die Messgerätschnittstelle 14a des Handwerkzeugs 10a empfängt während eines Betriebs Daten mit Messinformationen des Handwerkzeugzusatzmessgeräts 16a von dem Handwerkzeugakku 28a. Die Datenverbindung 50a leitet diese Daten an die Steuereinheit 18a des Handwerkzeugs 10a weiter. Die Steuereinheit 18a weist einen Microcontroller auf.

Auf Grundlage der Messinformationen der Daten beeinflusst die Steuereinheit 18a teilautomatisch einen Zustand des Hauptaktionsmittels 40a. Die Messinformationen enthalten in diesen Ausführungsbeispiel Informationen über eine Neigung des Systems 38a, Informationen über einen Abstand des Handwerkzeugs 10a zu einem nicht näher dargestellten Werkstück und Informationen zu einer Ausrichtung des Systems 38a relativ zu dem Werkstück und senkrecht zu der Neigung. Auf Grundlage dieser Informationen verhindert die Steuereinheit 18a einen Arbeitsbeginn, wenn das Handwerkzeug 10a bzw. ein Einsatzwerkzeug nicht eine bestimmte Ausrichtung, hier senkrecht zu dem Werkstück, aufweist. Des Weiteren stoppt die Steuereinheit 18a einen Arbeitsvorgang, in dem sie das Einsatzwerkzeug anhält, wenn eine gewünschte Bearbeitungstiefe erreicht ist. Nicht näher dargestellt sind entsprechende Eingabe- und Anzeigemittel für einen Bediener.

Der Handwerkzeugakku 28a ist an einem der Einsatzwerkzeugbefestigung 46a abgewandten Ende des Handwerkzeuggehäuses 42a an dem Haupthandgriff 44a angeordnet. Der Handwerkzeugakku 28a weist eine Messgerätschnittstelle 34a, eine Handwerkzeugschnittstelle 32a, eine Steuereinheit 52a und einen Energiespeicher 54a auf. Die Handwerkzeugschnittstelle 32a des Handwerkzeugakkus 28a ist in einem betriebsbereiten Zustand mit der Akkuschnittstelle 12a und der Messgerätschnittstelle 14a des Handwerkzeugs 10a verbunden. Die Handwerkzeugschnittstelle 32a überträgt dann die Daten mit den Messinformationen und eine Energie, mit der das Hauptaktionsmittel 40a des Handwerkzeugs 10a versorgt wird, an das Handwerkzeug 10a.

Die Messgerätschnittstelle 34a des Handwerkzeugakkus 28a ist an eine der Einsatzwerkzeugbefestigung 46a des Handwerkzeugakkus 28a gegenüberliegenden Seite eines Gehäuses 56a des Handwerkzeugakkus 28a angeordnet. Die Messgerätschnittstelle 34a des Handwerkzeugakkus 28a ist mit dem Handwerkzeugzusatzmessgerät 16a verbunden und empfängt in einem betriebsbereiten Zustand Daten mit Messinformationen von dem Handwerkzeugzusatzmessgerät 16a und überträgt Energie an das Handwerkzeugzusatzmessgerät 16a. Alternativ könnte ein Handwerkzeugzusatzmessgerät direkt mit einer Messgerätschnittstelle des Handwerkzeugs 10a verbunden sein (gestrichelt dargestellt).

Die Steuereinheit 52a des Handwerkzeugakkus 28a weist ein Schaltelement 36a auf, das von den Messinformationen der Daten abhängig eine Energieversorgung des Handwerkzeugs 10a schaltet. Aufgrund der von den Messinformationen beschriebenen Neigung des Systems 38a erkennt die Steuereinheit 52a des Handwerkzeugakkus 28a einen unbeherrschten Blockierfall des Handwerkzeugs 10a und schaltet in diesem Fall die Energieversorgung des Handwerkzeugs 10a ab.

Das Handwerkzeugzusatzmessgerät 16a weist eine Handwerkzeugschnittstelle 24a, eine Energieschnittstelle 26a, ein Sendemittel 30a und einen Neigungssensor 58a und einen Abstandsmesssensor 60a auf. Ein nicht näher dargestelltes mechanisches Verbindungselement der Handwerkzeugschnittstelle 24a ist einstückig mit einem mechanischen Verbindungselement der Energieschnittstelle 26a ausgebildet. Die Handwerkzeugschnittstelle 24a überträgt während eines Betriebs mittels des Sendemittels 30a Daten mit Messinformationen über den Handwerkzeugakku 28a an das Handwerkzeug 10a.

Die Energieschnittstelle 26a nimmt von dem Handwerkzeugakku 28a eine Betriebsenergie auf. Dazu ist die Energieschnittstelle 26a des Handwerkzeugzusatzmessgeräts 16a mit der Messgerätschnittstelle 34a des Handwerkzeugakkus 28a verbunden. Der Handwerkzeugakku 28a versorgt gleichzeitig das Hauptaktionsmittel 40a des Handwerkzeugs 10a. Um bei einer gleichzeitigen Versorgung elektromagnetische Störungen von Elementen, insbesondere von dem Hauptaktionsmittel 40a, des Handwerkzeugzusatzmessgeräts 16a zu verhindern, weist die Energieschnittstelle 26a einen nicht näher dargestellten elektrischen Filter auf.

Der Abstandsmesssensor 60a misst auf drei unterschiedlichen Strecken 62a einen Abstand zu dem Werkstück. Die Strecken 62a liegen dabei nicht auf einer Ebene. Aus den drei unterschiedlichen Abständen kann der Abstandsmesssensor 60a oder die Steuereinheit 18a des Handwerkzeugs 10 einen Abstand von der Einsatzwerkzeugbefestigung 46a zu dem Werkstück und daraus eine Bearbeitungstiefe bestimmen. Des Weiteren kann daraus und aus der Neigung eine Ausrichtung des Systems 38a bestimmt werden.

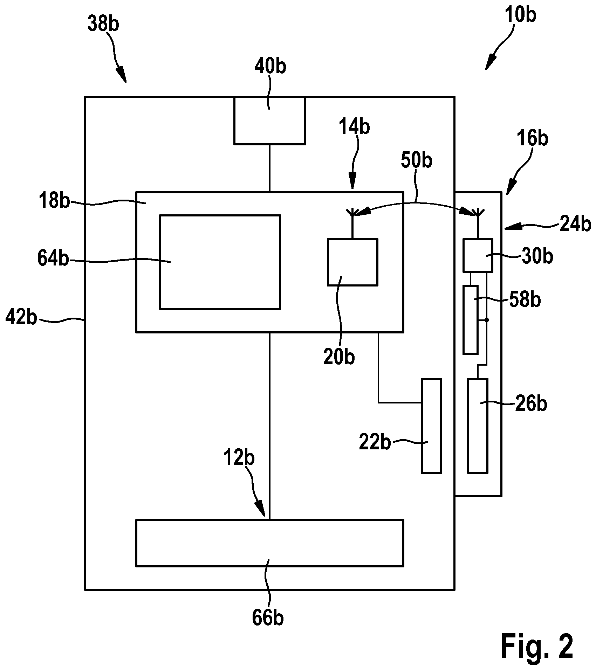

In Figur 2 ist ein nicht erfindungsgemäßes Ausführungsbeispiel gezeigt. Zur Unterscheidung der Ausführungsbeispiele ist der Buchstabe a in den Bezugszeichen des Ausführungsbeispiels in der Figur 1 durch den Buchstaben b in den Bezugszeichen des Ausführungsbeispiels in der Figur 2 ersetzt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des anderen Ausführungsbeispiels, insbesondere der Figur 1, verwiesen werden kann.

Figur 2 zeigt ein weiteres System 38b mit einem Handwerkzeug 10b und einem Handwerkzeugzusatzmessgerät 16b. Das Handwerkzeug 10b ist als ein Handwerkzeugmessgerät bzw. als ein Entfernungsmessgerät ausgebildet. Das Handwerkzeug 10b weist eine Akkuschnittstelle 12b, eine Messgerätschnittstelle 14b, eine Steuereinheit 18b, eine Energieschnittstelle 22b, ein Hauptaktionsmittel 40b und ein Handwerkzeuggehäuse 42b auf. Das Hauptaktionsmittel 40b ist als ein Entfernungsmesssensor ausgebildet. Die Steuereinheit 18b wertet eine Kenngröße des Hauptaktionsmittels 40b aus und gibt sie auf einem Anzeigemittel 64b der Steuereinheit 18b wieder. Die Akkuschnittstelle 12b verbindet die Steuereinheit 18b mit einer in einem betriebsbereiten Zustand innerhalb des Handwerkzeuggehäuses 42b angeordneten Akkueinheit 66b.

Die Messgerätschnittstelle 14b des Handwerkzeugs 10b weist ein Empfangsmittel 20b auf, das während eines Betriebs drahtlos übermittelte Daten mit Messinformationen empfängt. Dazu weist das Empfangsmittel 20b einen nicht näher dargestellten Empfänger auf. Der Empfänger ist als ZigBee-Empfänger ausgebildet. Alternativ könnte ein Empfänger als ein anderer, dem Fachmann als sinnvoll erscheinenden Empfänger ausgebildet sein. Die Messinformationen enthalten Informationen über eine Neigung des Systems 38b. Die Steuereinheit 18b bestimmt eine Entfernung teilautomatisch in einem Moment, in dem das Handwerkzeug 10b eine bestimmte Ausrichtung aufweist, hier waagrecht oder senkrecht. Die Energieschnittstelle 22b des Handwerkzeugs 10b gibt während eines Betriebs eine Betriebsenergie an das Handwerkzeugzusatzmessgerät 16a drahtlos ab. Dazu weist die Energieschnittstelle 22b eine nicht näher dargestellte Spule auf, die die Energie induktiv überträgt.

Das Handwerkzeugzusatzmessgerät 16b ist werkzeuglos lösbar mechanisch mit dem Handwerkzeug 10b verbunden. Es ist an einer Außenseite des Handwerkzeuggehäuses 42b angeordnet. Es weist eine Energieschnittstelle 26b mit einer nicht näher dargestellten Spule auf, die eine von dem Handwerkzeug 10b drahtlos übertragene Energie empfängt.

Das Handwerkzeugzusatzmessgerät 16a weist eine Handwerkzeugschnittstelle 24b mit einem Sendemittel 30b und einen Neigungssensor 58b auf. Der Neigungssensor 58b misst eine Kenngröße, die eine Neigung des Systems 38b beschreibt. Das Sendemittel 30b übermittelt während eines Betriebs die Daten drahtlos. Dazu weist das Sendemittel 30b einen nicht näher dargestellten Sender auf. Der Sender ist als ein ZigBee-Sender ausgebildet. Alternativ könnte ein Sender als ein anderer, dem Fachmann als sinnvoll erscheinenden Sender ausgebildet sein.

## Patentansprüche

1. System bestehend aus einem Handwerkzeug (10a) mit einer Akkuschnittstelle (12a), einem Handwerkzeugakku (28a) und einem Handwerkzeugzusatzmessgerät (16a), wobei das Handwerkzeug (10a) zumindest eine Messgerätschnittstelle (14a) aufweist, die dazu vorgesehen ist, während eines Betriebs zumindest Daten mit Messinformationen des Handwerkzeugzusatzmessgeräts (16a) zu empfangen, wobei das Handwerkzeugzusatzmessgerät (16a) eine Handwerkzeugschnittstelle (24a) und eine Energieschnittstelle (26a) aufweist,
**dadurch gekennzeichnet, daß** das Handwerkzeugzusatzmessgerät (16a) ein Sendemittel (30a), einen Neigungssensor (58a) und einen Abstandsmesssensor (60a) aufweist, und die Handwerkzeugschnittstelle (24a) dazu vorgesehen ist, während des Betriebs mittels des Sendemittels (30a) die Daten mit Messinformationen über den Handwerkzeugakku (28a) an das Handwerkzeug (10a) zu übertragen.

2. System nach Anspruch 1, **dadurch gekennzeichnet, dass** das Handwerkzeug (10a) eine Steuereinheit (18a) aufweist, die dazu vorgesehen ist, einen Arbeitsvorgang von den Messinformationen abhängig zu beeinflussen.

3. System nach Anspruch 2, **dadurch gekennzeichnet, dass** die Steuereinheit (18a) dazu vorgesehen ist, einen Arbeitsvorgang von den Messinformationen abhängig zu stoppen.

4. System nach einem der vorhergehenden Ansprüche, **dadurch gekennzeichnet, dass** die Messgerätschnittstelle (14a) werkzeuglos trennbar ist.

5. System nach einem der vorhergehenden Ansprüche, **dadurch gekennzeichnet, dass** das Handwerkzeugzusatzmessgerät (16a) eine Energieschnittstelle (26a) aufweist, die dazu vorgesehen ist, eine Betriebsenergie von dem Handwerkzeugakku (28a) aufzunehmen, der gleichzeitig das Handwerkzeug (10a) versorgt.

6. System nach einem der vorhergehenden Ansprüche, **dadurch gekennzeichnet, dass** der Handwerkzeugakku (28a) eine Handwerkzeugschnittstelle (32a) und zumindest eine Messgerätschnittstelle (34a) aufweist, wobei die Handwerkzeugschnittstelle (32a) dazu vorgesehen ist, zumindest Energie an das Handwerkzeug (10a) zu übertragen, und die zumindest eine Messgerätschnittstelle (34a) dazu vorgesehen ist, im Betrieb in zumindest einem Betriebszustand eine Energie an das Handwerkzeugzusatzmessgerät (16a) zu übertragen.

7. System nach Anspruch 6, **dadurch gekennzeichnet, dass** die Messgerätschnittstelle (34a) des Handwerkzeugackkus (28a) dazu vorgesehen ist, die Daten mit Messinformationen von dem Handwerkzeugzusatzmessgerät (16a) zu empfangen.

8. System nach einem der Ansprüche 6 oder 7, **dadurch gekennzeichnet, dass** die Handwerkzeugschnittstelle (32a) dazu vorgesehen ist, zumindest die Daten mit Messinformationen an das Handwerkzeug (10a) zu übertragen.

9. System nach einem der Ansprüche 6 bis 8, **dadurch gekennzeichnet, dass** der Handwerkzeugakku (28a) zumindest ein Schaltelement (36a) aufweist, das dazu vorgesehen ist, von den Daten mit Messinformationen abhängig eine Energieversorgung des Handwerkzeugs (10a) zu schalten.

## Claims

1. System composed of a hand-held tool (10a) with a battery interface (12a), a hand-held tool battery (28a) and an auxiliary measuring device (16a) for a hand-held tool, wherein the hand-held tool (10a) has at least one measuring device interface (14a) which is provided for receiving at least data with measurement information of the auxiliary measuring device (16a) for the hand-held tool during operation, wherein the auxiliary measuring device (16a) for the hand-held tool has a hand-held tool interface (24a) and a power interface (26a), **characterized in that** the auxiliary measuring device (16a) for the hand-held tool has a transmitter means (30a), an inclination sensor (58a) and a distance measuring sensor (60a), and the hand-held tool interface (24a) is provided for transmitting the data with measurement information about the hand-held tool battery (28a) to the hand-held tool (10a) by means of the transmitter means (30a) during operation.

2. System according to Claim 1, **characterized in that** the hand-held tool (10a) has a control unit (18a) which is provided for influencing a work process in accordance with the measurement information.

3. System according to Claim 2, **characterized in that** the control unit (18a) is provided for stopping a work process in accordance with the measurement information.

4. System according to one of the preceding claims, **characterized in that** the measuring device interface (14a) can be disconnected without using a tool.

5. System according to one of the preceding claims, **characterized in that** the auxiliary measuring device (16a) for the hand-held tool has a power interface (26a) which is provided for taking up operational power from the hand-held tool battery (28a) which simultaneously supplies the hand-held tool (10a).

6. System according to one of the preceding claims, **characterized in that** the hand-held tool battery (28a) has a hand-held tool interface (32a) and at least one measuring device interface (34a), wherein the hand-held tool interface (32a) is provided for transmitting at least power to the hand-held tool (10a), and the at least one measuring device interface (34a) is provided for transmitting power to the auxiliary measuring device (16a) for the hand held tool in at least one operating state.

7. System according to Claim 6, **characterized in that** the measuring device interface (34a) of the hand-held tool battery (28a) is provided for receiving the data with measurement information from the auxiliary measuring device (16a) for the hand-held tool.

8. System according to one of Claims 6 and 7, **characterized in that** the hand-held tool interface (32a) is provided for transmitting at least the data with measurement information to the hand-held tool (10a).

9. System according to one of Claims 6 to 8, **characterized in that** the hand-held tool battery (28a) has at least one switching element (36a) which is provided for switching a power supply of the hand-held tool (10a) in accordance with the data with measurement information.

## Revendications

1. Système composé d'un outil manuel (10a) comprenant une interface d'accumulateur (12a), un accumulateur d'outil manuel (28a) et un appareil de mesure supplémentaire d'outil manuel (16a), l'outil manuel (10a) possédant au moins une interface d'appareil de mesure (14a) qui est conçue pour, pendant un mode de mesure, recevoir au moins des données comprenant des informations de mesure de l'appareil de mesure supplémentaire d'outil manuel (16a), l'appareil de mesure supplémentaire d'outil manuel (16a) possédant une interface d'outil manuel (24a) et une interface d'énergie (26a),
**caractérisé en ce que** l'appareil de mesure supplémentaire d'outil manuel (16a) possède un moyen d'émission (30a), un capteur d'inclinaison (58a) et un capteur de mesure de distance (60a), et l'interface d'outil manuel (24a) est conçue pour, pendant le fonctionnement, transmettre à l'outil manuel (10a) à l'aide du moyen d'émission (30a), des données comprenant des informations de mesure à propos de l'accumulateur d'outil manuel (28a).

2. Système selon la revendication 1, **caractérisé en ce que** l'outil manuel (10a) possède une unité de commande (18a) qui est conçue pour influencer une opération de travail en fonction des informations de mesure.

3. Système selon la revendication 2, **caractérisé en ce que** l'unité de commande (18a) est conçue pour arrêter une opération de travail en fonction des informations de mesure.

4. Système selon l'une des revendications précédentes, **caractérisé en ce que** l'interface d'appareil de mesure (14a) peut être déconnectée sans outil.

5. Système selon l'une des revendications précédentes, **caractérisé en ce que** l'appareil de mesure supplémentaire d'outil manuel (16a) possède une interface d'énergie (26a) qui est conçue pour prélever une énergie de fonctionnement de l'accumulateur d'outil manuel (28a), qui alimente en même temps l'outil manuel (10a).

6. Système selon l'une des revendications précédentes, **caractérisé en ce que** l'accumulateur d'outil manuel (28a) possède une interface d'outil manuel (32a) et au moins une interface d'appareil de mesure (34a), l'interface d'outil manuel (32a) étant conçue pour transmettre au moins de l'énergie à l'outil manuel (10a) et l'au moins une interface d'appareil de mesure (34a) étant conçue pour, en fonctionnement dans au moins un état de fonctionnement, transmettre une énergie à l'appareil de mesure supplémentaire d'outil manuel (16a).

7. Système selon la revendication 6, **caractérisé en ce que** l'interface d'appareil de mesure (34a) de l'accumulateur d'outil manuel (28a) est conçue pour recevoir les données comprenant des informations de mesure de l'appareil de mesure supplémentaire d'outil manuel (16a).

8. Système selon la revendication 6 ou 7, **caractérisé en ce que** l'interface d'outil manuel (32a) est conçue pour transmettre à l'appareil de mesure (10a) au moins les données comprenant des informations de mesure.

9. Système selon l'une des revendications 6 à 8, **caractérisé en ce que** l'accumulateur d'outil manuel (28a) possède au moins un élément de commutation (36a) qui est conçu pour commuter les données comprenant des informations de mesure en fonction d'une alimentation en énergie de l'outil manuel (10a).
